# EUROPÄISCHE PATENTANMELDUNG

(11) **EP 0 840 419 A1**
(43) Veröffentlichungstag der Anmeldung: **06.05.1998**
(21) Anmeldenummer: 97118516.0
(22) Anmeldetag: 24.10.1997
(51) Int. Cl.: H02G 3/18, G02B 6/44

(54) **Anordnung zur Aufnahme eines Lichtwellenleitersteckverbinders, insbesondere für einen Bodentank**

(30) Priorität: 30.10.1996 DE 19643928
(71) Anmelder: THE WHITAKER CORPORATION, Wilmington, Delaware 19808 (US)
(72) Erfinder: Dauber, Michael, 67547 Worms (DE); Stein, Monika, 64289 Darmstadt (DE)
(74) Vertreter: Heinz-Schäfer, Marion

(57) **Zusammenfassung**

In Bodentanks wird eine Vielzahl von Leistungs- und Signalleitungen angeordnet. Wenn im Bodentank Lichtwellenleiter verwendet werden, muss besonders beachtet werden, dass der Lichtwellenleiter bei den möglichen Bewegungen nicht zu eng gebogen wird. Eine zu enge Biegung eines Lichtwellenleiters hat eine Dämpfung des Signals zur Folge. Die Anordnung zur Aufnahme eines Lichtwellenleitersteckverbinders besteht aus einem Umgehäuse (1) und einem Aufnahmegehäuse (2), dass aufgebaut ist aus einem ersten Teilgehäuse (3) und einem zweiten Teilgehäuse (4). Das Aufnahmegehäuse (2) ist im Umgehäuse (1) drehbar gelagert. Zylindrische Wandabschnitte (23,24) des Aufnahmegehäuses (2) weisen Begrenzungsnocken (28,29) auf, die mit dem Umgehäuse (1) derart zusammenwirken, dass der Drehwinkelbereich des Lichtwellenleitersteckverbinders begrenzt wird.

## Beschreibung

Die Erfindung bezieht sich auf eine Anordnung zur Aufnahme eines Lichtwellenleitersteckverbinders, insbesondere für einen Bodentank.

Aus der EP 410 588 B1 ist ein Bodentank bekannt. In modernen Büros und in anderen Betriebsräumen werden Bodentanks eingesetzt, um eine Vielzahl von Leistungs- und Signalleitungen direkt an die verschiedenen Arbeitsplätze zuführen zu können. Besonders in grossen Räumen sind Bodentanks gewünscht, weil hier die Leitungen statt über dem Boden unter dem Boden zum Arbeitsplatz verlegt werden können. Die Gefahr des Stolperns wird ausgeschaltet und die Arbeitsplätze können unabhängig von den Wänden eingerichtet werden. Die am Arbeitsplatz notwendigen Geräte, wie Telefon, Computer etc. werden nicht mehr über Wandsteckdosen, sondern nahe beim Arbeitsplatz im Bodentank an das entsprechende Netz angeschlossen. Im Bodentank sind für jede Leitungsart verschiedene Module angeordnet. Die EP 410 588 B1 lehrt wie die Module zwecks Bedienerfreundlichkeit und zwecks besserer Zugänglichkeit beweglich angeordnet sind. Wenn das Netz mit Lichtwellenleitern aufgebaut ist, muss besonders beachtet werden, dass der Lichtwellenleiter bei den möglichen Bewegungen nicht zu eng gebogen wird. Eine zu enge Biegung des Lichtwellenleiters hat eine Dämpfung des Signals zur Folge.

Ausgehend von diesem Stand der Technik, ist es Aufgabe der Erfindung, eine Anordnung zur Aufnahme eines Lichtwellenleitersteckverbinders, insbesondere für einen Bodentank anzugeben, bei dem der Lichtwellenleiter den minimal erlaubten Biegeradius nicht unterschreitet.

Diese Aufgabe wird gelöst durch eine Anordnung zur Aufnahme eines Lichtwellenleitersteckverbinders, insbesondere für einen Bodentank, mit folgenden Merkmalen:

Es ist ein Umgehäuse vorgesehen; das Umgehäuse weist senkrecht zu einer Achse angeordnet Seitenwände auf und weist, konzentrisch zu dieser Achse angeordnet, zwei an den Seitenwänden befestigte Wandabschnitte auf, die zwei gegenüberliegende Wandabschnitte eines Zylindermantels bilden und die eine Zugangsöffnung und eine Abgangsöffnung für den Lichtwellenleiter frei lassen; im Umgehäuse ist ein Aufnahmegehäuse zur Aufnahme mindestens eines Lichtwellenleitersteckverbinders in einem beschränkten Drehwinkelbereich um die Achse drehbar angeordnet; das Aufnahmegehäuse weist senkrecht zur Achse angeordnet Seitenwände auf und weist konzentrisch zu dieser Achse angeordnet zwei an den Seitenwänden befestigte Wandabschnitte auf, die zwei gegenüberliegende Wandabschnitte eines Zylindermantels bilden, die eine Führung des Aufnahmegehäuses im Umgehäuse bewirken und die eine Zugangsöffnung und eine Abgangsöffnung für die Lichtwellenleiter frei lassen; das Aufnahmegehäuse ist derart ausgebildet, das an zwei gegenüberliegenden Seiten jeweils mindestens ein komplementäres Teil eines Lichtwellenleitersteckverbinders aufnehmbar ist, wobei die Achse des Lichtwellenleitersteckverbinders senkrecht zur Drehachse verläuft und die entsprechenden Lichtwellenleiter jeweils durch die Zugangsöffnungen und durch die Abgangsöffnungen verlaufen.

Bevorzugte Weiterbildungen der Erfindung ergeben sich aus den jeweiligen Unteransprüchen.

Es ist von Vorteil, dass die Lichtwellenleiter angrenzend an den Lichtwellenleitersteckverbinder bei der Einleitung in die Anordnung gegen übermässiges Durchbiegen geschützt werden. Dies wird dadurch erreicht, dass das Umgehäuse Führungsbereiche aufweist, die an die Wandabschnitte angrenzen und die Lichtwellenleiter beim Verlauf durch die Zugangsöffnungen und Abgangsöffungen unterstützen.

Es ist weiter von Vorteil, dass die Anordnung einfach auf eine Unterlage befestigt werden kann. Dies wird dadurch erreicht, dass das Umgehäuse Befestigungsflächen aufweist, die senkrecht zu den Seitenwänden angeordnet sind und Mittel zur Orientierung und Befestigung an einer Unterlage aufweisen.

Es ist auch von Vorteil, dass mit der Anordnung die Lichtwellenleitersteckverbinder einfach montiert werden können. Dies wird dadurch erreicht, dass das Aufnahmegehäuse aus zwei Teilgehäusen zusammengesetzt ist und dass das erste Teilgehäuse mit dem zweiten Teilgehäuse verbindbar ist mittels Rastelementen am ersten Teilgehäuse, die zusammenwirken mit weiteren Rastelementen am zweiten Teilgehäuse.

Es ist weiter von Vorteil, dass mit der Anordnung die Lichtwellenleiter leicht ausgerichtet werden können. Dies wird dadurch erreicht, dass das zweite Teilgehäuse am Ende der Drehachse Rundzapfen aufweist, und dass das Umgehäuse zu den Rundzapfen passenden Lagerbuchsen aufweist, derart dass das Aufnahmegehäuse im Umgehäuse auf der Drehachse quer zur Richtung des Lichtwellenleitersteckverbinders drehbar gelagert ist.

Die grundlegende Idee der Erfindung ist die konzentrische Anordnung eines im wesentlichen walzenförmiges Aufnahmegehäuses für Lichtwellenleitersteckverbinder in einem Umgehäuse. Das Aufnahmegehäuse ist im Umgehäuse um eine Rotationsachse, die senkrecht zur Steckrichtung der Lichtwellenleiter liegt, wie eine Walze in einer dafür vorgesehenen Umhüllung, drehbar gelagert. Die Drehbewegung des Aufnahmegehäuses im Umgehäuse wird durch Begrenzungsnocken in einem bestimmten Winkelbereich begrenzt. Hiermit wird erreicht, dass der Lichtwellenleiter im Bereich des Lichtwellenleitersteckverbinder nicht geknickt werden kann. Zum einfacheren Zusammenbau des Aufnahmegehäuses mit den Lichtwellenleitersteckverbindern, die im Aufnahmegehäuse zusammengesteckt werden, ist das Aufnahmegehäuse aus zwei Teilgehäusen mit komplementären Rastmittel verrastbar aufgebaut.

Ein Ausführungsbeispiel der Erfindung wird anhand der Figuren beschrieben. Es zeigen:
Figur 1 eine perspektivische Ansicht der Anordnung gemäss der vorliegenden Erfindung,
Figur 2 eine perspektivische Ansicht des Aufnahmegehäuses,
Figur 3 eine perspektivische Ansicht des ersten Teilgehäuses,
Figur 4 eine Ansicht des ersten Teilgehäuses gesehen von der Seite der Abgangsöffnung,
Figur 5 einen Schnitt durch das erste Teilgehäuse entlang der Linie AA von Figur 4,
Figur 6 eine perspektivische Ansicht des zweiten Teilgehäuses,
Figur 7 eine Ansicht des zweiten Teilgehäuses gesehen von der Seite der Abgangsöffnung,
Figur 8 einen Schnitt durch das zweite Teilgehäuse entlang der Linie BB von Figur 7,
Figur 9 eine perspektivische Ansicht des Umgehäuses alleine, und
Figur 10 einen Schnitt durch die Anordnung gemäss der vorliegenden Erfindung, eingebaut in einem Bodentank und versehen mit Lichtwellenleitersteckverbinder.

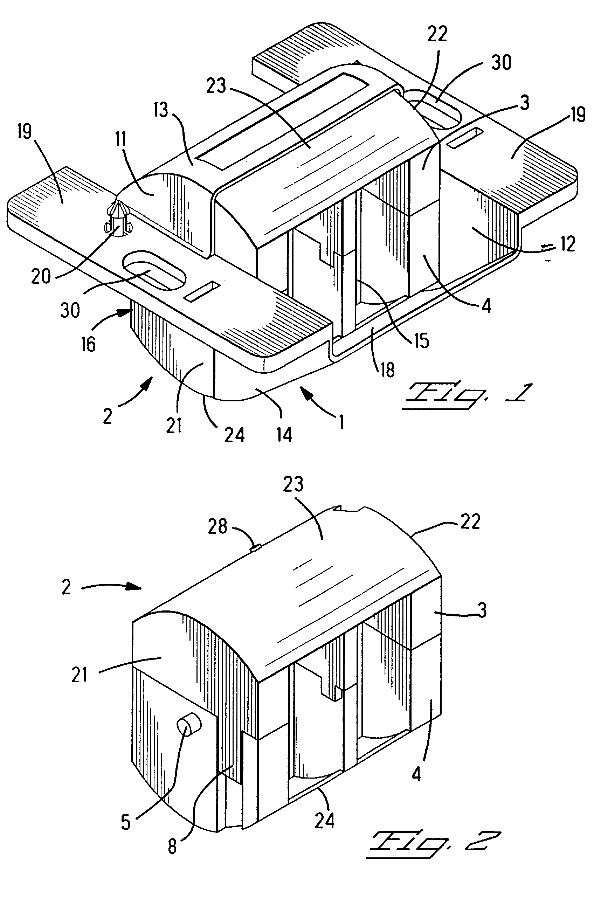

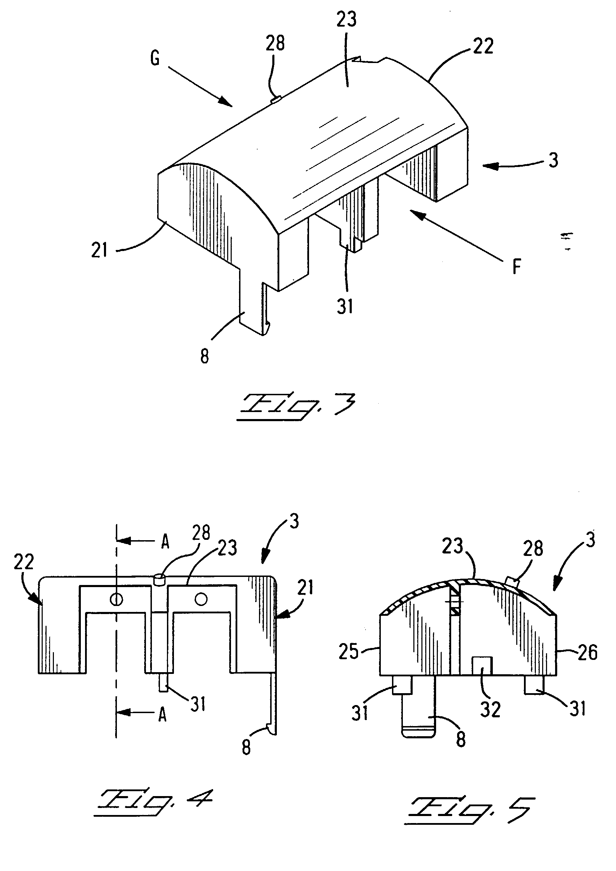

In Figur 1 ist eine Anordnung zur Aufnahme eines Lichtwellenleitersteckverbinders, insbesondere für einen Bodentank, dargestellt. Die Anordnung besteht aus einem Umgehäuse 1 und einem Aufnahmegehäuse 2. Die Anordnung ist hier dargestellt ohne Lichtwellenleiter und ohne einen Bodentank. Das Umgehäuse 1 ist für sich alleine in Figur 9 dargestellt und das Aufnahmegehäuse 2 ist in Figur 2 dargestellt. Das Aufnahmegehäuse 2 ist im Umgehäuse 1 drehbar um eine Achse angeordnet.

In Figur 1 und besser in Figur 9 ist ersichtlich, wie das Umgehäuse 1 senkrecht zur Drehachse, um die das Aufnahmegehäuse 2 drehbar angeordnet ist, zwei Seitenwände 11, 12 aufweist. Das Umgehäuse 1 weist konzentrisch zur gleichen Drehachse 2 Wandabschnitte 13, 14 auf. Die Wandabschnitte 13, 14 bilden zwei gegenüberliegende Wandabschnitte eines Zylindermantels und verbinden die erste Seitenwand 11 mit der zweiten Seitenwand 12. Zwischen den Wandabschnitten 13, 14 sind am Umfang des Zylindermantels eine Zugangsöffnung 15 und eine Abgangsöffnung 16 für den Lichtwellenleiter frei gelassen. Das Umgehäuse 1 weist auf zwei gegenüberliegenden Seiten Befestigungsflächen 19 auf, die senkrecht zu den Seitenwänden 11, 12 angeordnet sind. Die Befestigungsflächen 19 weisen unter anderem Mittel 20, 30 zur Ausrichtung und zur Befestigung auf, mit denen das Umgehäuse 1 mit einem hier nicht gezeigten Bodentank ausgerichtet und befestigt werden kann. Das Mittel 30 zur Ausrichtung und Befestigung ist hier als Langloch dargestellt.

In Figur 1 ist ersichtlich, wie angrenzend an den zylindrischen Wandabschnitt 14 ein Führungsbereich 18 angeordnet ist. Der Führungsbereich 18 dient dazu, dass der Lichtwellenleiter mit einem gleichmässigen Verlauf in die Zugangsöffnung 15 des Umgehäuses 1 zugeführt werden kann. Das Aufnahmegehäuse 2 zur Aufnahme eines Lichtwellenleitersteckverbinders ist im Umgehäuse 1 in einem beschränkten Drehwinkelbereich um die Drehachse drehbar.

In Figur 1 und besser in Figur 2 ist ersichtlich, wie das Aufnahmegehäuse 2 aus einem ersten Teilgehäuse 3 und einem zweiten Teilgehäuse 4 zusammengestellt ist. Das Aufnahmegehäuse 2 weist senkrecht zur Drehachse angeordnet zwei Seitenwände 21, 22 auf. Das Aufnahmegehäuse 2 weist konzentrisch zur Drehachse angeordnet zwei Wandabschnitte 23, 24 auf, die zwei gegenüberliegende Wandabschnitte eines Zylindermantels bilden und an den Seitenwänden 21, 22 befestigt sind.

In Figur 2 ist das Aufnahmegehäuse 2 von Figur 1 alleine dargestellt. In den Seitenwänden 21, 22 sind Rundzapfen 5 angeordnet. Die Drehachse, um die das Aufnahmegehäuse 2 im Umgehäuse 1 drehbar angeordnet ist, verläuft durch die Rundzapfen 5. An der senkrecht angeordneten Seitenwand 21 ist ein Rastelement 8 angeordnet und auf der gegenüberliegenden Seitenwand 22 ist ein weiteres Rastelement angeordnet. Mit den Rastelementen 8 wird das erste Teilgehäuse 3 mit dem zweiten Teilgehäuse 4 verbunden. In Figur 9 wird ersichtlich, wie der Rundzapfen 5 von einer Lagerbuchse 6 aufnehmbar ist.

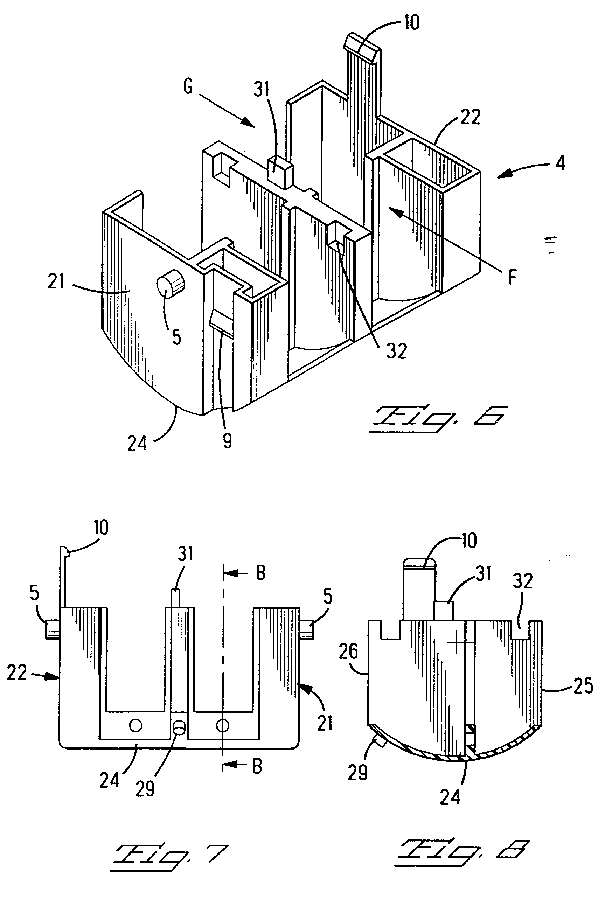

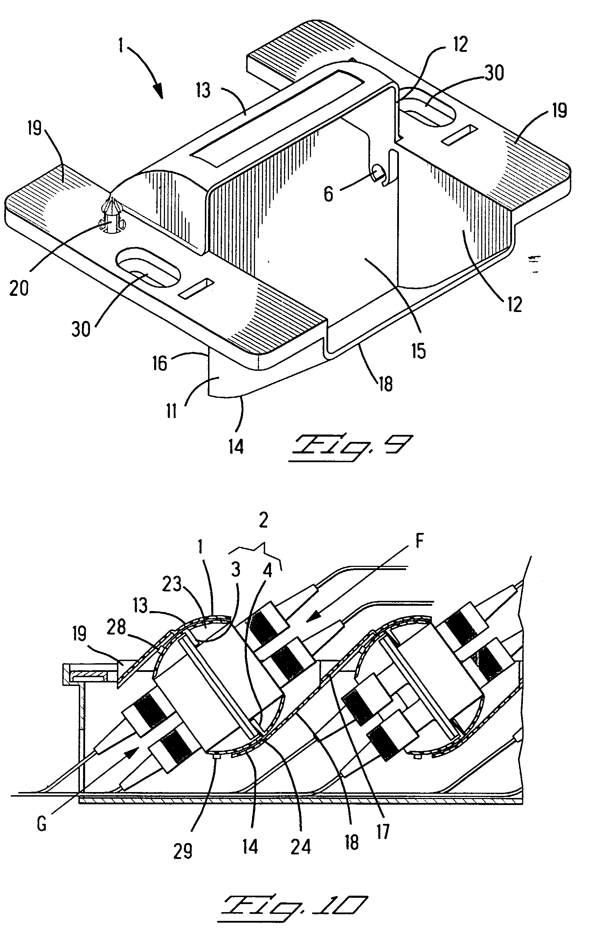

Im folgenden werden nun die Figuren 3, 4 und 5 gemeinsam beschrieben. In Figur 3 ist das erste Teilgehäuse 3 alleine perspektivisch dargestellt. In Figur 4 ist eine Ansicht des ersten Teilgehäuses 3 dargestellt und in Figur 5 ist ein Schnitt entlang der Linie AA von Figur 4 durch das erste Teilgehäuse 3 dargestellt. Das erste Teilgehäuse 3 weist senkrechte Seitenwände 21, 22 auf. Die Seitenwände 21, 22 sind miteinander verbunden über einen zylindrischen Wandabschnitt 23. Die Seitenwände 21,22 stehen senkrecht zur Drehachse und der zylindrische Wandabschnitt 23 verläuft konzentrisch zur Drehachse. Das erste Teilgehäuse 3 lässt eine Zugangsöffnung 25 und eine Abgangsöffnung 26 für die Lichtwellenleiter frei. An der senkrecht angeordneten Seitenwand 21 ist ein Rastelement 8 angeordnet und auf der gegenüberliegenden Seitenwand 22 ist ein weiteres Rastelement angeordnet. Das erste Teilgehäuse 3 weist Zapfen 31 und Aussparungen 32 auf, zur Verbindung mit dem zweiten Teilgehäuse 4. Wie in Figur 3, 4 und 5 ersichtlich, weist der zylindrische Wandabschnitt 23 einen Begrenzungsnocken 28 auf. Der Begrenzungsnocken 28 wirkt mit dem Umgehäuse derart zusammen, dass der Drehwinkel des Aufnahmegehäuses 2 im Umgehäuse 1 nicht beliebig gross, sondern begrenzt wird. Hiermit wird erreicht, dass der Lichtwellenleiter im Bereich des Steckverbinders nicht geknickt werden kann. Der Biegeradius des Lichtwellenleiters wird auf ein Minimum begrenzt, so dass eine Dämpfung des Signals verhindert wird. Mit dem Pfeil F wird der optimale Verlauf des Lichtwellenleiters zur Zugangsöffnung 25 des Aufnahmegehäuses 2 dargestellt und mit dem Pfeil G wird ebenso der optimale Verlauf des Lichtwellenleiters aus der Abgangsöffnung 26 des Aufnahmegehäuses 2 dargestellt.

In den Figuren 6, 7 und 8 ist das zweite Teilgehäuse 4 dargestellt. Figur 6 zeigt das zweite Teilgehäuse 4 für sich alleine in perspektivischer Darstellung. Figur 7 Zeigt eine Ansicht auf dem zweiten Teilgehäuse 4 und Figur 8 zeigt einen Schnitt entlang der Linie BB von Figur 7. Das zweite Teilgehäuse 4 weist wie das erste Teilgehäuse 3 Seitenwände 21, 22 auf. Die Seitenwände 21, 22 sind über einen zylindrischen Wandabschnitt 24 miteinander verbunden. An der Seitenwand 21 ist in Figur 6 ein Rundzapfen 5 ersichtlich und in Figur 7 ein weiterer Rundzapfen 5 an der gegenüberliegenden Seitenwand 22. Die Drehachse, um die das Aufnahmegehäuses 2 im Umgehäuse 1 drehbar gelagert ist, verläuft durch diese Rundzapfen 5. Die Seitenwand 21 des zweiten Teilgehäuses 4 weist ein Rastmittel 9 auf, das mit dem Rastmittel 8 des ersten Teilgehäuses 3 zusammenwirkt, und an der gegenüberliegenden Seitenwand 22 befindet sich ein weiteres Rastmittel 10, das mit weiteren Rastmitteln des ersten Teilgehäuses 3 zusammenwirkt. Weiterhin weist das zweite Teilgehäuse 4 weitere Zapfen 31 und weitere Aussparungen 32 auf, die mit den Zapfen 31 und Aussparungen 32 des ersten Teilgehäuses 3 zusammenwirken.

Wenn man das zweite Teilgehäuse 4 von Figur 6 mit dem ersten Teilgehäuse 3 von Figur 2 vergleicht, fällt auf, dass das erste Teilgehäuse 3 kleiner ist als die Hälfte des Aufnahmegehäuses 2 und dass das zweite Teilgehäuse 4 grösser ist als die Hälfte des Aufnahmegehäuses 2. Dies ist notwendig, um die Rundzapfen 5 auf der Drehachse des Aufnahmegehäuses 2 anordnen zu können. Hierdurch wird die Lagerung des Aufnahmegehäuses 2 genau definiert und die notwendige Präzision für die Lichtwellenleitersteckverbindung wird gewährleistet. Mit dem Pfeil F wird der optimale Verlauf des Lichtwellenleiters zur Zugangsöffnung 25 des Aufnahmegehäuses 2 dargestellt und mit dem Pfeil G wird ebenso der optimale Verlauf des Lichtwellenleiters aus der Abgangsöffnung 26 des Aufnahmegehäuses 2 dargestellt.

In Figur 9 ist wie in Figur 1 ersichtlich, wie das Umgehäuse 1 senkrecht zur Drehachse angeordnet Seitenwände 11, 12 aufweist und wie konzentrisch zu dieser Achse zwei an den Seitenwänden 11, 12 befestigte Wandabschnitte 13, 14 angeordnet sind. Die Wandabschnitte 13, 14 bilden zwei gegenüberliegende Wandabschnitte eines Zylindermantels. Zwischen den Wandabschnitten 13, 14 sind am Umfang des Zylindermantels eine Zugangsöffnung 15 und eine Abgangsöffnung 16 für den Lichtwellenleiter freigelassen. Das Umgehäuse 1 weist auf zwei gegenüberliegenden Seiten Befestigungsflächen 19 auf, die senkrecht zu den Seitenwänden 11, 12 angeordnet sind. Die Befestigungsflächen 19 weisen unter anderem Mittel 20, 30 zur Ausrichtung und zur Befestigung auf, mit denen das Umgehäuse in einem hier nicht gezeigten Bodentank ausgerichtet und befestigt werden kann. In Figur 9 ist auch eine bei der Besprechung von Figur 1 bereits erwähnte Lagerbuchse 6 ersichtlich, die auf der dem Aufnahmegehäuse 2 zugewandten Seitenwand 12 des Umgehäuses 1 angeordnet ist und mit dem Rundzapfen 5 zur drehbaren Lagerung des Aufnahmegehäuses 2 in dem Umgehäuse 1 zusammenwirkt. Die Anordnung der Rundzapfen 5 am Aufnahmegehäuse 2 und der Lagerbuchsen 6 am Umgehäuse 1 ist austauschbar. In einer nicht gezeigten Ausführung können die Rundzapfen am Umgehäuse und die Lagerbuchsen am Aufnahmegehäuse angeordnet sein. In Figur 1 und Figur 9 ist auch ersichtlich, wie angrenzend an den zylindrischen Wandabschnitt 14 ein Führungsbereich 18 angeordnet ist.

Im Schnitt von Figur 10 ist ersichtlich, wie der zweite zylindrische Wandabschnitt 13 des Umgehäuses 1 ebenfalls einen Führungsbereich 17 aufweist. Die Führungsbereiche 17, 18 dienen dazu, dass der Lichtwellenleiter im Bereich des Steckverbinder nicht geknickt werden kann und mit einem gleichmässigen Verlauf in das Umgehäuse 1 und aus dem Umgehäuse 1 heraus geführt werden kann. Im Umgehäuse 1 ist das Aufnahmegehäuse 2 zur Aufnahme eines Lichtwellenleitersteckverbinders in einem beschränkten Drehwinkelbereich, um die Drehachse drehbar.

In Figur 10 ist ein Schnitt durch einen Teil eines Bodentanks dargestellt. In Figur 10 sind zwei Anordnungen zur Aufnahme eines Lichtwellenleitersteckverbinders nebeneinander angeordnet. Hiermit soll gezeigt werden, dass in einem Bodentank mehrere Lichtwellenleitersteckverbinder angeordnet sein können. Im Schnitt von Figur 10 wird mit dem Pfeil F der Zugang des Lichtwellenleiters zum Lichtwellenleitersteckverbinder und mit Pfeil G der Abgang des Lichtwellenleiters zum Lichtwellenleitersteckverbinder dargestellt. Vom Umgehäuse 1 sind im Schnitt die zylindrischen Wandabschnitte 13, 14 und die Führungsbereiche 17, 18 ersichtlich. Ebenfalls ersichtlich ist die Befestigungsfläche 19, mit der das Umgehäuse im Bodentank befestigt wird. Im Schnitt von Figur 10 sind am Aufnahmegehäuse 2 ebenfalls die Begrenzungsnocken 28, 29 ersichtlich. Die Begrenzungsnocken 28, 29 wirken mit dem Umgehäuse 1 derart zusammen, dass der Drehwinkelbereich des Lichtwellenleitersteckverbinders eingeschränkt wird.

## Patentansprüche

1. Anordnung zur Aufnahme eines Lichtwellenleitersteckverbinders, insbesondere für einen Bodentank, mit folgenden Merkmalen:
a) es ist ein Umgehäuse (1) vorgesehen,
b) das Umgehäuse (1) weist senkrecht zu einer Achse angeordnet Seitenwände (11,12) auf und weist konzentrisch zu dieser Achse angeordnet zwei an den Seitenwänden (11,12) befestigte Wandabschnitte (13,14) auf, die zwei gegenüberliegende Wandabschnitte eines Zylindermantels bilden und die eine Zugangsöffnung (15) und eine Abgangsöffnung (16) für den Lichtwellenleiter freilassen,
c) im Umgehäuse (1) ist ein Aufnahmegehäuse (2) zur Aufnahme mindestens eines Lichtwellenleitersteckverbinders in einem beschränkten Drehwinkelbereich um die Achse drehbar angeordnet,
d) das Aufnahmegehäuse (2) weist senkrecht zur Drehachse angeordnet Seitenwände (21,22) auf und weist konzentrisch zu dieser Achse angeordnet zwei an den Seitenwänden (21,22) befestigte Wandabschnitte (23,24) auf, die zwei gegenüberliegende Wandabschnitte eines Zylindermantels bilden, die eine Führung des Aufnahmegehäuses (2) im Umgehäuse (1) bewirken und die eine Zugangsöffnung (25) und eine Abgangsöffnung (26) für die Lichtwellenleiter freilassen,
e) das Aufnahmegehäuse (2) ist derart ausgebildet, dass an zwei gegenüberliegenden Seiten jeweils mindestens ein komplementäres Teil eines Lichtwellenleitersteckverbinders aufnehmbar ist, wobei die Achse des Lichtwellenleitersteckverbinders senkrecht zur Drehachse verläuft und die entsprechenden Lichtwellenleiter jeweils durch die Zugangsöffnungen (15,25) und durch die Abgangsöffnungen (16,26) verlaufen.

2. Anordnung zur Aufnahme eines Lichtwellenleitersteckverbinders nach dem Anspruch 1, dadurch gekennzeichnet, dass das Umgehäuse (1) an die Wandabschnitte (13,14) angrenzende Führungsbereiche (17,18) aufweist, derart, dass die Lichtwellenleiter in das Umgehäuse (1) und aus diesem heraus geführt werden.

3. Anordnung zur Aufnahme eines Lichtwellenleitersteckverbinders nach Anspruch 1 oder 2, dadurch gekennzeichnet, dass das Umgehäuse (1) senkrecht zu den Seitenwänden (11,12) angeordneten Befestigungsflächen (19) aufweist.

4. Anordnung zur Aufnahme eines Lichtwellenleitersteckverbinders nach einem der Ansprüche 1 bis 3, dadurch gekennzeichnet, dass das Aufnahmegehäuse (2) aus zwei Teilgehäusen (3,4) zusammengesetzt ist.

5. Anordnung zur Aufnahme eines Lichtwellenleitersteckverbinders nach einem der Ansprüche 1 bis 4, dadurch gekennzeichnet, dass am zweiten Teilgehäuse (4) des Aufnahmegehäuses (2) und am Umgehäuse (1) Rundzapfen (5) beziehungsweise dazu passenden Lagerbuchsen (6) angeordnet sind, derart, dass das Aufnahmegehäuse (2) im Umgehäuse (1) auf der Drehachse quer zur Richtung des LichtwellenleiterSteckverbinders drehbar gelagert ist.

6. Anordnung zur Aufnahme eines Lichtwellenleitersteckverbinders nach einem der Ansprüche 1 bis 5, dadurch gekennzeichnet, dass das erste Teilgehäuse (3) mittels Rastelementen (8) am ersten Teilgehäuse (3), die zusammenwirken mit weiteren Rastelementen (9,10) am zweiten Teilgehäuses (4), mit dem zweiten Teilgehäuse (4) verbindbar ist.

7. Anordnung zur Aufnahme eines Lichtwellenleitersteckverbinders nach einem der Ansprüche 1 bis 6, dadurch gekennzeichnet, dass das erste Teilgehäuse (3) und das zweite Teilgehäuse (4) auf zwei gegenüberliegenden Wandabschnitten (23,24) Begrenzungsnocken (28,29) aufweisen, die mit den Wandabschnitten (13,14) derart zusammenwirken, dass der Drehwinkel des Aufnahmegehäuses (2) im Umgehäuse (1) beschränkt wird.

8. Anordnung zur Aufnahme eines Lichtwellenleitersteckverbinders nach einem der Ansprüche 1 bis 7, dadurch gekennzeichnet, dass das Umgehäuse (1) an den Befestigungsflächen (19) Mittel (30) zur Ausrichtung und Befestigung an einem Bodentank aufweist.
